# EUROPÄISCHE PATENTSCHRIFT

(11) **EP 2 898 198 B1**
(45) Veröffentlichungstag und Bekanntmachung des Hinweises auf die Patenterteilung: **10.05.2017**
(21) Anmeldenummer: 13741735.8
(22) Anmeldetag: 24.07.2013
(51) Int. Cl.: F01N 3/36, F01N 3/025, F01N 3/20, F02M 61/04, F02M 61/18, F02M 57/00, F02M 63/00, F02M 61/20

(54) **EINSPRITZVENTIL UND ABGASNACHBEHANDLUNGSVORRICHTUNG**
INJECTION VALVE AND EXHAUST GAS AFTERTREATMENT APPARATUS
SOUPAPE D'INJECTION ET SYSTÈME DE POST-TRAITEMENT DE GAZ D'ÉCHAPPEMENT

(30) Priorität: 18.09.2012 DE 102012216638
(43) Veröffentlichungstag der Anmeldung: 29.07.2015
(73) Patentinhaber: Robert Bosch GmbH, 70442 Stuttgart (DE)
(72) Erfinder: KEUSEN, Guenter, 71686 Remseck-Pattonville (DE); REUSING, Volker, 70469 Stuttgart (DE)
(86) Internationale Anmeldenummer: PCT/EP2013/065605
(87) Internationale Veröffentlichungsnummer: WO 2014/044439

(56) Entgegenhaltungen:
- EP-A1- 1 209 353
- WO-A1-02/088541
- JP-A- 2004 204 795

## Beschreibung

### Stand der Technik

Die Erfindung betrifft ein Einspritzventil für eine Abgasnachbehandlungseinrichtung sowie eine Abgasnachbehandlungsvorrichtung gemäß dem Oberbegriff der unabhängigen Ansprüche.

Im Laufe der Entwicklung von Verbrennungsmotoren hat sich gezeigt, dass es immer schwieriger und aufwendiger wird, eine immer strenger werdende Abgasgesetzgebung allein mit innermotorischen Maßnahmen zu erfüllen. Daher haben sich Abgasnachbehandlungssysteme durchgesetzt, bei denen eine Flüssigkeit, beispielsweise ein Reduktionsmittel oder ein Regenerationsmittel, in den Abgasstrang des Verbrennungsmotors eindosiert wird. Diese Eindosierung erfolgt über ein am Abgasstang angeordnetes Einspritzventil, welches eine Zufuhr der Flüssigkeit in den Abgaskanal freigibt. Typische Flüssigkeiten sind dabei zum einen Harnstoff-Wasser- Lösungen zur selektiven katalytischen Reduktion von Stickoxiden oder Kohlenwasserstoffe, die zur Aufheizung des Abgases, beispielsweise zur Regeneration eines Partikelfilters oder eines NOx-Speicherkatalysators, in den Abgasstrang des Verbrennungsmotors eindosiert werden. Dabei können sowohl die im Abgas enthaltenen Rußpartikel als auch die hohen Temperaturen im Abgasstrang und damit verbundene Verkokungen an den Spritzöffnungen des Einspritzventils zu Funktionsbeeinträchtigungen bis hin zum Ausfall des Einspritzventils führen.

Aus der DE 10 2006 057 287 ist daher ein Abgaskanal mit einem Einspritzventil bekannt, bei dem zwischen einem Einspritzventil und einer Abgasleitung des Abgasstrangs eine Klappe angeordnet ist, welche in Dosierpausen des Einspritzventils verschließbar ist, um das Einspritzventil vor einer hohen thermischen Belastung durch das Abgas im Abgaskanal zu schützen.

EP 1 209 353 A1 offenbart ein Vrennstoffeinspritzventil, insbesondere zum direkten Einspritzen von Brennstoff in einen Brennraum einer gemischverdichtenden, fremdgezündeten Brennkraftmaschine, mit einem Aktorund einer durch den Aktor betätigbaren Ventilnadel zur Betätigung eines Ventilschliesskörpers, der zusammen mit einer an einem Ventilsitzkörper ausgebildeten Ventilsitzfläche einen ersten Dichtsitz bildet. An einem abströmseitigen Ende des Ventilsitzkörpers ist ein Aufsatz angeordnet, der eine in einer ersten Ausnehmung des Aufsatzes angeordnete Membran aufweist, die kraftschlüssig mit einem Zapfen verbunden ist, der eine zweite Ausnehmung des Aufsatzes so durchgreift, dass der Zapfen mit dem Aufsatz einen zweiten Dichtsitz bildet. Dabei ist der Zapfen durch den Druck des zuströmenden Brennstoffs in einer Abströmrichtung betätigbar.

WO 02/088541 A1 beschreibt ein Brennstoffeinspritzventil für Brennstoffeinspritzanlagen von Brennkraftmaschinen, insbesondere zum. direkten Einspritzen von Brennstoff in einen Brennraum einer Brennkraftmaschine, mit einer Ventillängsachse, mit einem Aktuator, mit einem beweglichen Ventilteil, das zum Öffnen und Schliessen des Ventils mit einem festen Ventilsitz zusammenwirkt, der an einem Ventilsitzkörper ausgebildet ist, und mit einer stromabwärts des Ventilsitzes im Ventilsitzkörper ausgebildeten Austrittsöffnung. Am stromabwärtigen Ende der Austrittsöffnung ist ein die Austrittsöffnung weitgehend verschliessendes Schlitzbildungselement angeordnet, das zwischen sich und einer Stirnseite des Ventilsitzkörpers einen schlitzförmigen Strömungsaustritt freilässt.

JP 2004 204795 A beschreibt eine Düse und einen Kraftstoffinjektor, die in Abhängigkeit von der Belastung eines Verbrennungsmotors zwischen einem Sprühmodus mit großer Eindringtiefe und einem Diffusionssprühmodus umgeschaltet werden können. Im Sprühmodus mit großer Eindringtiefe ist ein Randbereich eines Nadelventils von einem ersten Ventilsitz beabstandet, der in einem Düsenkörper ausgebildet ist, um das Ventil zu öffnen. Ein bewegliches Flusskanalelement wird so bewegt, das eine Unterseite eines konischen Bereichs des Flusskanalelements an einem flachen Bereich des Nadelventils anliegt. Im Diffusionssprühmodus ist der Randbereich des Nadelventils von dem ersten Ventilsitz beabstandet, der in dem Düsenkörper ausgebildet ist, um das Ventil zu öffnen. Das Flusskanalelements wird in eine Position bewegt, in der die Unterseite seines konischen Bereichs vom flachen Bereich des Nadelventils beabstandet ist.

### Offenbarung der Erfindung

Das erfindungsgemäße Einspritzventil mit den Merkmalen des unabhängigen Patentanspruchs 1 hat den Vorteil, dass an dem Einspritzventil ein Deckel befestigt ist, über welchen die mindestens eine Einspritzöffnung, bevorzugt auf ihrer Austrittsseite, verschließbar ist. Ein Deckel zwischen den Einspritzöffnungen des Einspritzventils und dem Abgaskanal hat den Vorteil, dass sich die Einspritzöffnungen weder durch Rußpartikel aus dem Abgaskanal zusetzen, noch dass es zu thermischer Verkokung der Flüssigkeit an den Einspritzöffnungen kommt, welche die Strömungsquerschnitte an den Spritzlöchern ebenfalls reduzieren oder ganz verschließen können. Durch eine Querschnittsveränderung könnte sich der Austritt der Flüssigkeit sowohl bezüglich der Menge als auch bezüglich der Strahlbildung verändern, was durch den Deckel verhindert wird. Durch die Befestigung des Deckels am Einspritzventil wird der Montageaufwand für das zusätzliche Anbringen eines Deckels am Abgasstrang vermieden, da das Einspritzventil mit der Klappe als Baugruppe montiert werden kann. Ferner wird die Abstimmung zwischen dem Öffnen des Einspritzventils und dem Öffnen der Klappe deutlich erleichtert, da nur noch eine Komponente und nicht mehr zwei räumlich getrennte Komponenten angesteuert werden müssen. Darüber hinaus wird durch einen am Einspritzventil befestigten Deckel die Ausrichtung der Einspritzöffnungen im Einspritzventil zum Deckel erleichtert, so dass es nicht durch ungünstige Einbaulagen dazu kommen kann, dass die Flüssigkeit bei geöffnetem Deckel durch die Einspritzöffnungen auf den Deckel gespritzt wird. Als weiteren Vorteil ist zu nennen, dass der Deckel das Einspritzventil zusätzlich zu dem Schließglied verschließen kann, so dass selbst in dem Fall, in dem eine Undichtheit beim Verschließen der mindestens einen Einspritzöffnung durch das Schließglied entsteht, ein unerwünschtes Austreten der Flüssigkeit in den Abgaskanal vermieden werden kann.

Durch eine rotatorische Bewegung kann der Deckel die mindestens eine Spritzlochöffnung mit einer kleinen Bewegungsamplitude öffnen und schließen. Der Deckel kann insbesondere außerhalb einer Mittelachse, beispielsweise an einem Gehäuserand, des Einspritzventils befestigt sein.

Durch die in den Unteransprüchen aufgeführten Maßnahmen sind vorteilhafte Weiterbildungen und Verbesserungen des vorgeschlagenen Einspritzventils sowie der vorgeschlagenen Abgasnachbehandlungsvorrichtung möglich.

Eine vorteilhafte Weiterbildung besteht darin, dass der Deckel mit dem Schließglied, insbesondere durch mechanische Kopplung, in Wirkzusammenhang steht. Durch eine Kopplung des Schließgliedes mit dem Deckel kann auch innerhalb des Einspritzventils auf einen zweiten Ansteuermechanismus verzichtet werden.

Besonders vorteilhaft ist dabei, wenn der Deckel mit dem Schließglied über einen gemeinsamen Aktuator betätigbar ist. Durch einen gemeinsamen Aktuator ist sichergestellt, dass das Schließglied zur Freigabe der Spritzlochöffnungen und der Deckel synchronisiert öffnen, so dass es bei einer Eindosierung der Flüssigkeit verhindert wird, dass die Flüssigkeit auf den Deckel gesprüht wird. Ferner wird in dieser Ausführungsform nur ein Aktuator benötigt, so dass kein zusätzlicher Aktuator für den Deckel notwendig ist.

Eine weitere vorteilhafte Weiterbildung des Einspritzventils besteht darin, dass der Deckel in axialer Richtung gegenüber der mindestens einen Einspritzöffnung verschiebbar ist. Bei einer axialen Bewegung ist der Deckel besonders leicht durch eine koaxial zur Mittelachse des Einspritzventils angeordnete Führung verschiebbar, so dass ein Verklemmen des Deckels sicher vermieden werden kann.

Eine weitere vorteilhafte Weiterbildung des Einspritzventils besteht darin, dass das Schließglied nach innen öffnet. Durch ein nach innen öffnendes Schließglied ist die mindestens eine Einspritzöffnung an der Eintrittsseite durch das Schließglied und an der Austrittsseite durch den Deckel verschließbar, wodurch eine doppelte Abdichtung möglich ist. Ferner kann so sichergestellt werden, dass es keine Berührungen bzw. Behinderungen zwischen dem Schließglied und dem Deckel gibt. Eine weitere vorteilhafte Weiterbildung besteht darin, dass die mindestens eine Einspritzöffnung schräg, insbesondere unter einem Winkel von 30° bis 60° zur Mittelachse des Einspritzventils ausgebildet ist. Eine schräge Ausbildung der Einspritzöffnungen ermöglicht es, Sprühstrahlen auszubilden, welche an einem Deckel, der ausschließlich axial, d.h. parallel zur Mittelachse, beweglich ist, vorbei gerichtet sind.

Eine weitere vorteilhafte Weiterbildung besteht darin, dass der Ventilkörper eine Spritzlochscheibe umfasst, wobei die mindestens eine Einspritzöffnung in der Spritzlochscheibe ausgebildet ist. Das Einbringen der Einspritzöffnung in die Spritzlochscheibe bzw. die Bearbeitung der Spritzlochscheibe ist gegenüber einer Bearbeitung des Ventilkörpers deutlich einfacher, wodurch die Fertigung kostengünstiger und weniger zeitintensiv ist. Zusätzlich stehen bei einer Spritzlochscheibe kostengünstige Fertigungsverfahren, beispielsweise das Stanzen von Löchern zur Verfügung, die bei einem Ventilkörper nicht realisiert werden können.

Eine weitere vorteilhafte Weiterbildung besteht darin, dass der Deckel sternförmig ausgebildet ist. Dabei ist der Deckel bevorzugt koaxial zur Mittelachse des Einspritzventils angeordnet. Der sternförmige Deckel kann sich um diese Mittelachse drehen und somit die mindestens eine Einspritzöffnung zyklisch öffnen und schließen.

### Kurze Beschreibung der Zeichnungen

Ausführungsbeispiele der Erfindung sind in den Zeichnungen dargestellt und in der nachfolgenden Beschreibung näher erläutert.
Fig. 1 zeigt ein hydraulisches Schaltbild einer Abgasnachbehandlungsvorrichtung mit einem erfindungsgemäßen Einspritzventil.
Fig. 2 zeigt ein weiteres hydraulisches Schaltbild einer AbgasnachbehandlungsVorrichtung mit einem erfindungsgemäßen Einspritzventil.
Fig. 3a und 3b zeigen ein Beispiel eines Einspritzventils, das nicht Bestandteil der beanspruchten Erfindung ist, in geschlossenem bzw. geöffnetem Betriebszustand.
Fig. 4 zeigt ein Ausführungsbeispiel eines erfindungsgemäßen Einspritzventils.
Fig. 5 zeigt ein weiteres alternatives. Beispiel eines Einspritzventils, das nicht Bestandteil der beanspruchten Erfindung ist.
Fig. 6a und Fig. 6b zeigen die Spitze eines Einspritzventils, das nicht Bestandteil der beanspruchten Erfindung ist, mit einem sternförmigen Deckel in geschlossenem (Fig. 6a) sowie geöffnetem (Fig. 6b) Betriebszustand.
Fig. 7 zeigt eine Variante des Einspritzventils aus Fig. 5, die nicht Bestandteil der beanspruchten Erfindung ist.

### Beschreibung der Zeichnungen

Die Erfindung sowie vorteilhafte Ausgestaltungen gemäß den Merkmalen der weiteren Ansprüche werden im Folgenden anhand der in den Zeichnungen dargestellten Ausführungsbeispiele näher erläutert. In den Figuren sind gleiche Bauteile oder Bauteile mit gleicher Funktion mit den gleichen Bezugszeichen gekennzeichnet.

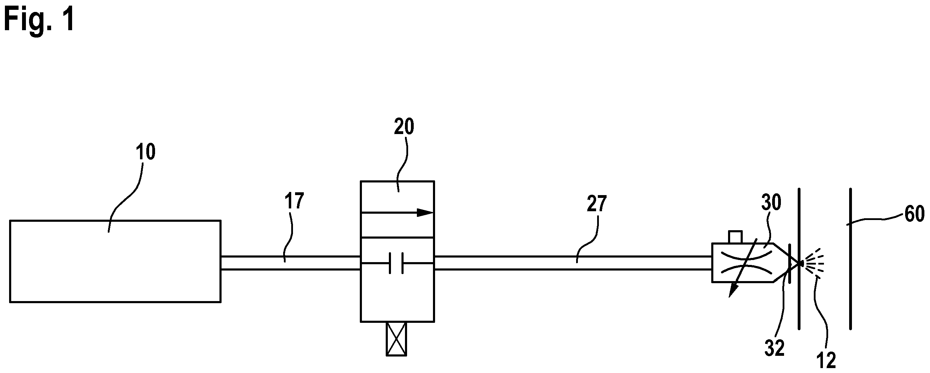

In der Fig. 1 ist ein hydraulisches Schaltbild einer erfindungsgemäßen Abgasnachbehandlungsvorrichtung dargestellt. Eine Versorgungseinrichtung 10 für ein Fluid 12 zur Unterstützung der Abgasnachbehandlung ist über eine Leitung 17 mit einem Dosierventil 20 verbunden. Das Dosierventil 20 ist über eine weitere Leitung 27 mit einem Einspritzventil 30 verbunden, über welches das Fluid 12 in einen Abgaskanal 60 eindosiert werden kann. Das Einspritzventil 30 umfasst einen Deckel 32, welcher zwischen dem Einspritzventil 30 und dem Abgaskanal 60 angeordnet und an dem Einspritzventil 30 befestigt ist.

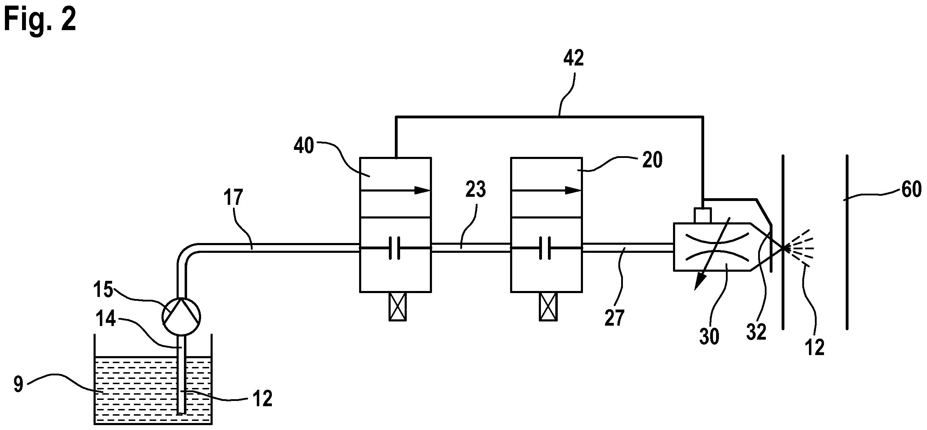

In Fig. 2 ist ein weiteres Beispiel für ein hydraulisches Schaubild einer erfindungsgemäßen Abgasnachbehandlungsvorrichtung dargestellt. Ein Vorratsbehälter 9 für das Fluid 12, beispielsweise Kraftstoff oder wässrige Harnstofflösung, ist über eine Leitung 14 mit einer Pumpe 15 verbunden. Die Pumpe 15 ist ihrerseits über eine weitere Leitung 17 mit einem Absperrventil 40 verbunden. Das Absperrventil 40 ist hydraulisch über eine Leitung 23 mit dem Dosierventil 20 verbunden und umfasst ferner einen Aktuator, über den der Deckel 32 an dem Einspritzventil 30 bewegt werden kann. Das Einspritzventil 30 ist am Abgaskanal 60 angeordnet und fluidisch über die Leitung 27 mit dem Dosierventil 20 verbunden. Der Deckel 32 ist mechanisch über eine Verbindung 42, beispielsweise einen Steg, mit dem Abschaltventil 40 verbunden und kann über den Aktuator des Abschaltventils 40 bewegt werden. Auf diese Weise kann über einen einzelnen Aktuator sowohl die Absperrfunktion in der Abgasnachhandlungsvorrichtung als auch die Schließfunktion des Deckels 32 realisiert werden.

Im Falle einer gewünschten Eindosierung des Fluides 12 in den Abgaskanal 60 wird das Absperrventil 40 geöffnet und das Fluid 12 über die Pumpe 15 zum Dosierventil 20 gefördert. Das Dosierventil 20 misst eine entsprechende Menge an Fluid 12 zu und führt sie dem Einspritzventil 30 über die Leitung 27 zu. Parallel zur Öffnung des Absperrventils 40 öffnet sich der Deckel 32 zwischen dem Einspritzventil 30 und dem Abgaskanal 60, wodurch eine Eindosierung des Fluides 12 in den Abgaskanal 60 ermöglicht wird. Dabei kann das Einspritzventil 30 sowohl als aktives Ventil als auch als passives Ventil ausgeführt sein.

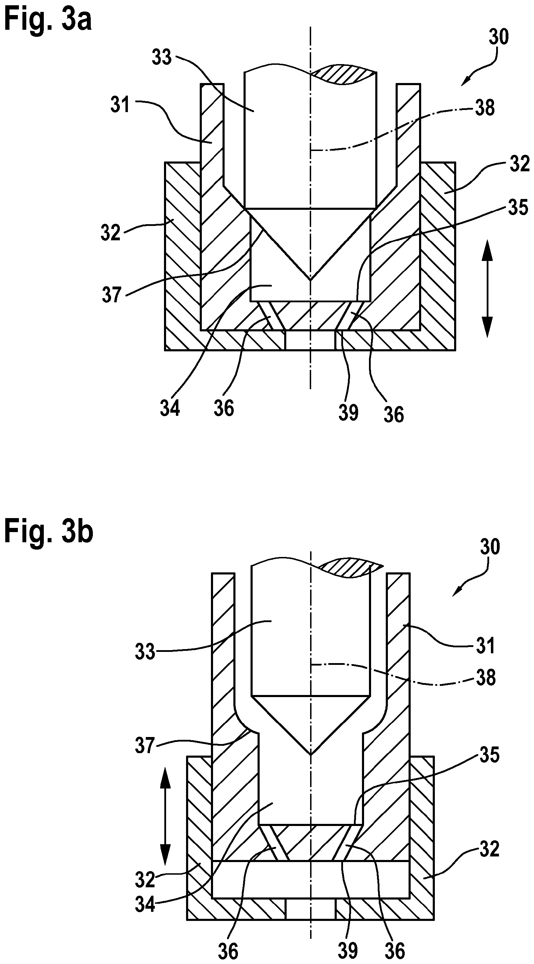

Fig.3a zeigt ein erstes Beispiel eines Einspritzventils 30, das nicht Bestandteil der beanspruchten Erfindung ist. Das Einspritzventil 30 umfasst einen Ventilkörper 31 mit einer Sacklochbohrung 34, wobei in dem Ventilkörper 31 ein Schließglied 33 angeordnet ist. Das Schließglied 33 dichtet bei geschlossenem Einspritzventil 30 die Fluidzufuhr an einem Ventilsitz 37 im Ventilkörper 31 ab. In dem Ventilkörper 31 sind Einspritzöffnungen 36 ausgebildet, welche bei geschlossenem Einspritzventil 30 an ihrer Austrittsseite 39 von dem Deckel 32 verschlossen werden. Die Einspritzöffnungen 36 sind dabei in einem Winkel von 30-60°, bevorzugt 45°, zur Mittelachse 38 des Einspritzventils 30 ausgebildet.

In Fig. 3b ist das Einspritzventil 30 aus Fig. 3a in geöffnetem Betriebszustand gezeigt. Dabei öffnet das Einspritzventil 30 nach innen, d.h. das Schließglied 33 hebt aus dem Ventilsitz 37 ab und bewegt sich in Richtung des Inneren des Einspritzventils 30. Somit kann das Fluid 12 zwischen Ventilsitz 37 und Schließglied 33 in die Sacklochbohrung 34 einströmen und von dort über die Eintrittsseite 35 über die Spritzlochöffnungen 36 an deren Austrittsseite 39 in den Abgaskanal 60 einströmen. Parallel dazu wird der Deckel 32 von den Spritzöffnungen 36 abgehoben, so dass auch die Austrittsseite 39 der Spritzöffnungen 36 freigegeben wird. Die Bewegung des Deckels 32 erfolgt durch eine Stellvorrichtung, deren Antrieb beispielsweise eine Magnetspule oder einen Elektromotor umfasst, und erfolgt in diesem Ausführungsbeispiel in axialer Richtung, d.h. koaxial bzw. parallel zu Mittelachse 38 des Einspritzventils 30. In diesem Ausführungsbeispiel ist die Geometrie der Spritzöffnungen 36 derart auf die Geometrie des Deckels 32 abgestimmt, dass bereits ein geringer Hub des Deckels 32 ausreicht, um die Spritzöffnungen 36 freizugeben.

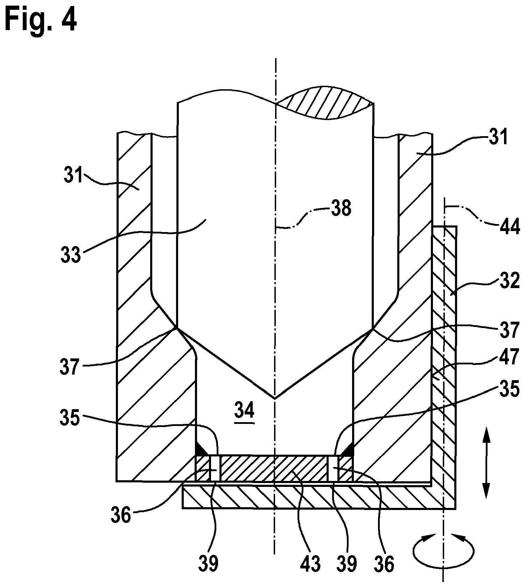

In Fig. 4 ist eine Ausführungsform eines erfindungsgemäßen Einspritzventils 30 dargestellt. Bei weitestgehend gleichem Aufbau zum Ausführungsbeispiel in Fig. 3a und Fig. 3b unterscheidet sich dieses Einspritzventil 30 dadurch, dass der Deckel 32 nicht koaxial zur Mittelachse 38 angeordnet ist, sondern seitlich an einer Mantelfläche 47 des Ventilkörpers 31 befestigt ist. Der Deckel 32 kann um eine Rotationsachse 44 rotieren und über diese Rotation die Spritzöffnungen 36 freigeben. Zusätzlich ist es in dieser Ausführungsform jedoch möglich, dass sich der Deckel 32 sowohl parallel zur Mittelachse 38 des Einspritzventils 30 axial verschiebt als auch rotatorisch um die Rotationsachse 44 bewegt. Die Spritzöffnungen 36 sind in diesem Ausführungsbeispiel in einer Spritzlochscheibe 43 ausgebildet, welche in den Ventilkörper 31 eingelegt oder eingepresst wird, oder mit dem Ventilkörper 31 verschweißt werden kann. Es ist jedoch auch möglich, wie in dem Ausführungsbeispiel in Fig. 3a und 3b einen einteiligen Ventilkörper 31 zu verwenden. Ferner ist auch andersrum möglich, den Ventilkörper 31 in Fig. 3a bzw. 3b zwei- oder mehrteilig, insbesondere mit einer Spritzlochscheibe 43, auszuführen. Ebenfalls alternativ kann die Drehachse des Deckels 32 mit der Mittelachse 38 des Einspritzventils 30 zusammenfallen, beispielsweise wenn ein Deckel 32 mit Löchern oder Aussparungen verwendet wird, welche durch die Rotation die Spritzöffnungen 36 in dem Ventilkörper 31 freigeben. In einer einfachen Ausführungsform besitzt der Deckel 32 nur zwei Endpositionen, nämlich geöffnet und geschlossen und kann zwischen diesen beiden Endpositionen hin- und herbewegt werden. In einer Weiterbildung kann der Deckel 32 bei bereits geöffnetem Einspritzventil 30 hin- und herbewegt werden. Durch diese Bewegung durchläuft das Einspritzventil 30 zwischen dem geschlossenen und geöffneten Deckel 32 verschiedene Ausströmungszustände, welche beispielsweise dazu geeignet sein können, Ablagerungsschichten abzutragen.

In einer weiteren Weiterbildung lässt sich der Deckel 32 stufenlos bewegen und in beliebigen Positionen fixieren, so dass die Einspritzöffnungen 36 im Ventilkörper 31 auch teilweise geöffnet werden können, um beispielsweise Einfluss auf die Durchflussmenge und/oder die Zerstäubungsqualität zu nehmen. Der Deckel 32 kann in geschlossenem Betriebszustand des Einspritzventils 30 entweder lose auf den Einspritzöffnungen 36 aufliegen, oder derart auf die Einspritzöffnungen 36 gedrückt werden, dass der Deckel 32 zusätzlich eine Absperrfunktion bzgl. des Fluides 12 in dem Einspritzventil 30 übernimmt und somit einen zusätzlich Schutz gegen ungewünschtes Einbringen von Fluid 12 in den Abgaskanal 60 darstellt.

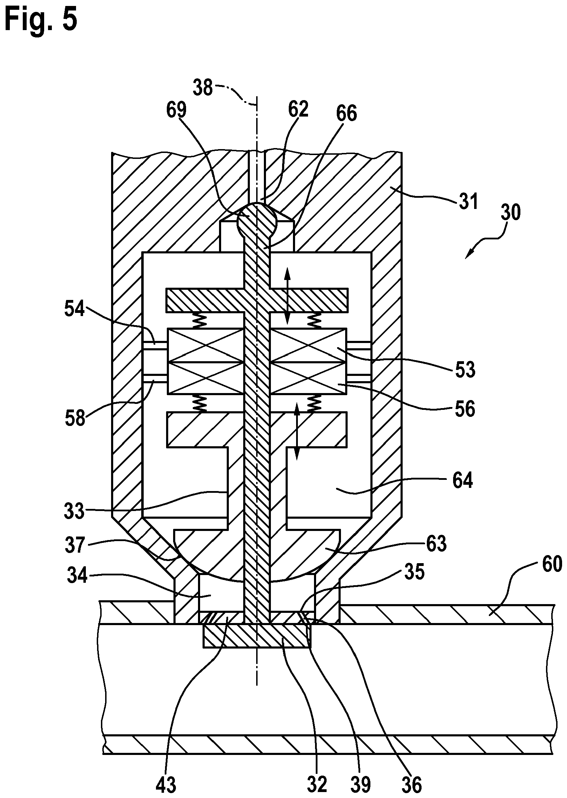

In Fig. 5 ist ein weiteres Beispiel eines Einspritzventils 30 dargestellt, das nicht Bestandteil der beanspruchten Erfindung ist. In dem Einspritzventil 30 in Fig. 5 sind die Funktionen des Abschaltventils 40, des Dosierventils 20 sowie des Einspritzventils 30 in einem einzigen Ventilkörper 31 realisiert. Der Deckel 32 ist mit einem inneren Schließglied 66 verbunden, über welches auf seinem dem Deckel 32 abgewandten Ende 69 eine Einlassöffnung 62 für eine Ventilkammer 64 im Ventilkörper 31 verschließbar ist. Das innere Schließglied 66 ist über einen Aktuator 53, beispielsweise einen Magnetkreis, axial verschiebbar. Das äußere Schließglied 63 ist koaxial um das innere Schließglied 66 angeordnet und kann über einen separaten Aktuator 56 angesteuert werden. Sowohl der Aktuator 53, als auch der Aktuator 56 sind jeweils über Haltestege 54, 58 im Ventilkörper 31 befestigt, wobei das Fluid durch die Zwischenräume zwischen den Stegen von der Einlassöffnung 62 zu der mindestens einen Spritzöffnung 36 strömen kann. Alternativ können die beiden Aktuatoren 53, 56 auch über einen gemeinsamen Haltekörper im Ventilkörper 31 befestigt werden, wobei der Haltekörper segmentweise Aussparungen und/oder Durchgangsbohrungen aufweist, welche dem Fluid ein Durchströmen des Haltekörpers ermöglichen.

Durch eine Ansteuerung des Aktuators 53 bewegt sich das innere Schließglied 66 in Richtung des Abgaskanals 60, wodurch die Einlassöffnung 62 freigegeben wird und das Fluid 12, insbesondere ein Reduktionsmittel zur Unterstützung der Abgasnachbehandlung eines Verbrennungsmotors, in die Ventilkammer 64 einströmen kann. Gleichzeitig hebt der Deckel 32 von den Spritzöffnungen 36 ab und gibt somit einen Strömungspfad in den Abgaskanal 60 frei. Neben einer mechanischen Kopplung von innerem Schließglied 66 und Deckel 32 ist es alternativ möglich, den Deckel 32 und das innere Schließglied 66 einstückig auszuführen. Das äußere Schließglied 33 wird durch den Aktuator 56 in Richtung der Einlassöffnung 62 gezogen, wodurch das äußere Schließglied 33 vom Ventilsitz 37 im Ventilkörper 31 abhebt und ein Einströmen des Fluids 12 in die Sacklochbohrung 34 und von dort über die Spritzlöcher 36 in den Abgaskanal 60 freigibt. Das Einspritzventil 30 gemäß Fig. 5 zeichnet sich durch eine besonders kompakte Bauweise aus.

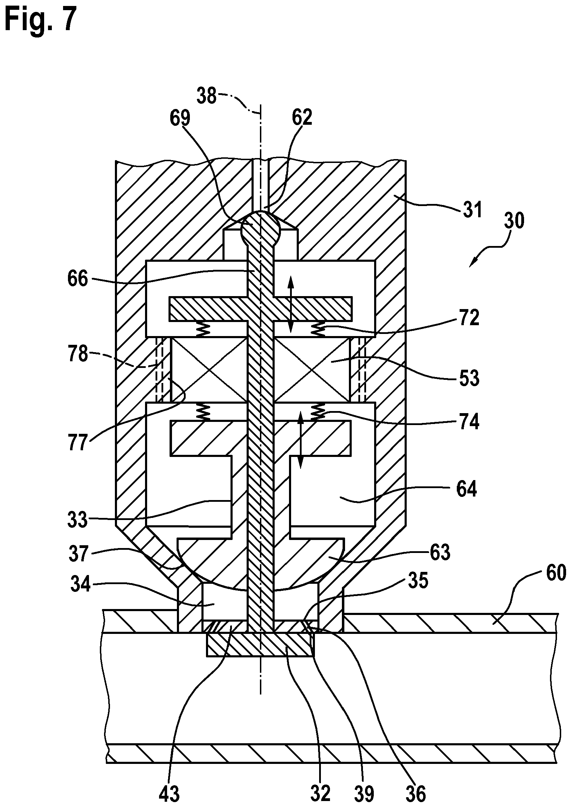

In Fig. 7 ist eine alternative Ausführungsform des Einspritzventils aus Fig. 5 dargestellt, die nicht Bestandteil der beanspruchten Erfindung ist. Bei weitestgehend gleichem Aufbau unterscheidet sich das Einspritzventil 30 in Fig. 7 dadurch, dass anstelle der zwei separaten Aktuatoren nur ein Aktuator 53 vorhanden ist, welcher über eine erste Federverbindung 72 mit dem inneren Schließglied 66 und über eine zweite Federverbindung 74 mit dem äußeren Schließglied 63 verbunden ist. Ferner wird dieser Aktuator 53, beispielsweise ein Magnetkreis, durch einen im Ventilkörper 31 ausgebildeten Haltebereich 77 fixiert, welcher mindestens eine Durchgangsbohrung 78 für das Fluid aufweist. Alternativ kann auch hier der Aktuator 53 über Stege bzw. einen zusätzlichen Haltekörper im Ventilkörper 31 fixiert werden.

Zum Eindosieren des Fluids wird das Einspritzventil 30 über den Aktuator 53 angesteuert. Da die erste Federverbindung 72 eine geringere Federsteifigkeit bzw. eine geringere Federkraft als die Federverbindung 74 aufweist, führt eine Ansteuerung des Aktuators 53 zunächst dazu, dass die geringere Kraft der ersten Federverbindung überwunden wird und sich das innere Schließglied 66 in Zeichnungsdarstellung nach unten bewegt. Dabei gibt das Ende 69 des inneren Schließgliedes die Einlassöffnung 62 frei und hebt gleichzeitig den Deckel 32 von den Einspritzöffnungen 36 ab. Dadurch kann das Fluid in den Ventilkörper 31 und durch die mindestens eine Durchgangsbohrung 78 in die Ventilkammer 64 einströmen. Erhöht man die Kraft des Aktuators 53 weiter, so bewegt sich das äußere Schließglied 63 nach Überwindung der Federkraft der zweiten Federverbindung 74 in Zeichnungsdarstellung nach oben, wobei das äußere Schließglied 63 von dem Ventilsitz 37 abhebt und somit ein Strömen des Fluids aus der Ventilkammer 64 durch die mindestens eine Einspritzöffnung 36 in den Abgaskanal 60 ermöglicht.

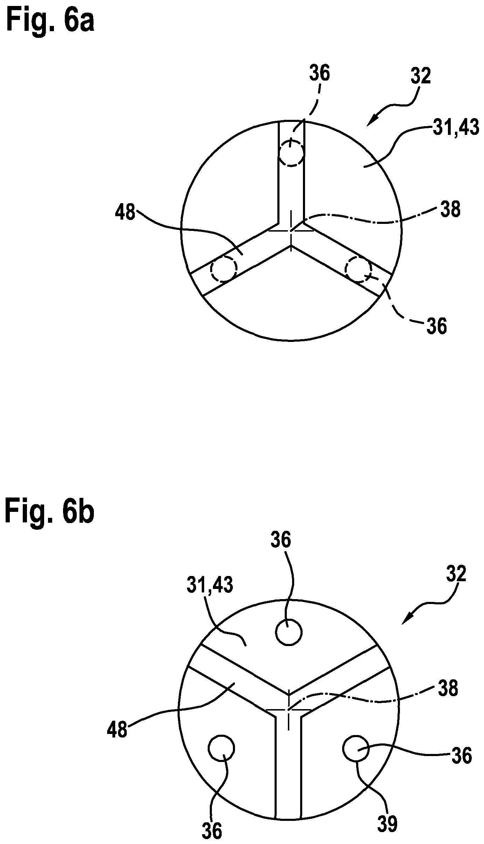

In Fig. 6a und Fig. 6b ist die Spitze eines Einspritzventils 30, das nicht Bestandteil der beanspruchten Erfindung ist, mit einem sternförmigen Deckel 32 in geöffnetem und geschlossenem Betriebszustand dargestellt. Dabei ist das Einspritzventil 30 in der Draufsicht, d.h. mit Blick auf die vom Deckel 32 geschützte Stirnseite, d.h. auf die Spritzlochscheibe 43 gezeigt. In Fig. 6a verdeckt der Deckel 32, welcher als dreiblättriger Rotor dargestellt ist, mit seinen Rotorblättern 48 die jeweiligen Spritzlochöffnungen 36. Dabei ist die Anzahl der Rotorblätter 48 an die Anzahl der Spritzlochöffnungen 36 angepasst. Der Deckel 32 ist dabei koaxial zur Mittelachse 38 des Einspritzventils 38 angeordnet. In Fig. 6b ist das Einspritzventil 30 in geöffnetem Betriebszustand dargestellt. Durch eine Rotation des Deckels 32 haben die Rotorblätter 48 die Spritzöffnungen 36 freigegeben, so dass eine Eindosierung des Fluids 12 durch die Zwischenräume zwischen den Rotorblättern 48 ermöglicht wird. Je nach Ausgestaltung der Rotorblätter 48 ist es möglich, dass die Rotorblätter Rußablagerungen oder Auskristallisierungen / Verkokungen des Fluids von der Spitze des Einspritzventils, insbesondere von den Einspritzöffnungen 36 ablösen. Dies kann sowohl mechanisch durch Abschaben der Rückstände erfolgen, als auch fluidisch-mechanisch, beispielsweise durch gezielte Zufuhr eines Fluids, insbesondere Kraftstoff, zum Ablösen der Ablagerungen, ggf. unterstützt durch ein mechanisches Abreinigen der Spitze des Einspritzventils. Ferner kann durch die Rotorblätter 48 zusätzlich ein Wirbel erzeugt werden, beispielsweise um eine Spraybildung oder eine Durchmischung des Fluides 12 mit dem Gas im Abgaskanal 60 zu verbessern.

## Patentansprüche

1. Einspritzventil (30) für eine Abgasnachbehandlungsvorrichtung, mit einem Ventikörper (31), wobei in dem Ventilkörper (31) mindestens eine Einspritzöffnung (36) ausgebildet ist, und mit einem Schließglied (33), mit welchem eine Fluidzufuhr zu der mindestens einen Einspritzöffnung (36) verschließbar ist, wobei an dem Einspritzventil (30) ein Deckel (32) befestigt ist, über welchen die mindestens eine Einspritzöffnung (36) auf ihrer Austrittsseite (39) verschließbar ist, **dadurch gekennzeichnet, dass** der Deckel (32) rotatorisch gegenüber der mindestens einen Einspritzöffnung (36) verschiebbar ist.

2. Einspritzventil (30) nach Anspruch 1, **dadurch gekennzeichnet, dass** der Deckel (32) mit dem Schließglied (33), insbesondere durch mechanische Kopplung, in Wirkzusammenhang steht.

3. Einspritzventil (30) nach Anspruch 2, **dadurch gekennzeichnet, dass** der Deckel (32) und das Schließglied (33) über einen gemeinsamen Aktuator (53), insbesondere einen Magnetkreis, betätigbar sind.

4. Einspritzventil (30) nach einem der Ansprüche 1 bis 3, **dadurch gekennzeichnet, dass** der Deckel (32) translatorisch gegenüber der mindestens einen Einspritzöffnung (36) verschiebbar ist.

5. Einspritzventil (30) nach einem der Ansprüche 1 bis 4, **dadurch gekennzeichnet, dass** der Deckel (32) axial verschiebbar ist.

6. Einspritzventil (30) nach einem der Ansprüche 1 bis 5, **dadurch gekennzeichnet, dass** das Schließglied (33) nach innen öffnet.

7. Einspritzventil (30) nach einem der Ansprüche 1 bis 6, insbesondere Anspruch 3, **dadurch gekennzeichnet, dass** die mindestens eine Einspritzöffnung (36) schräg, insbesondere unter einem Winkel von 30 - 60°, zur Mittelachse (38) des Einspritzventils (30) ausgebildet ist.

8. Einspritzventil (30) nach einem der Ansprüche 1 bis 7, **dadurch gekennzeichnet, dass** der Ventilkörper (31) eine Spritzlochscheibe (43) umfasst, wobei die mindestens eine Einspritzöffnung (36) in der Spritzlochscheibe (43) ausgebildet ist.

9. Einspritzventil (30) nach einem der Ansprüche 1 bis 8, **dadurch gekennzeichnet, dass** der Deckel (32) sternförmig ausgebildet ist.

## Claims

1. Injection valve (30) for an exhaust-gas aftertreatment device, having a valve body (31), wherein at least one injection opening (36) is formed in the valve body (31), and having a closing element (33) by means of which a fluid supply to the at least one injection opening (36) can be closed off, wherein a cover (32) is fastened to the injection valve (30), by means of which cover the at least one injection opening (36) can be closed off on its outlet side (39), **characterized in that** the cover (32) is displaceable rotationally relative to the at least one injection opening (36).

2. Injection valve (30) according to Claim 1, **characterized in that** the cover (32) is operatively connected to the closing element (33), in particular by mechanical coupling.

3. Injection valve (30) according to Claim 2, **characterized in that** the cover (32) and the closing element (33) are actuable by means of a common actuator (53), in particular a magnetic circuit.

4. Injection valve (30) according to one of Claims 1 to 3, **characterized in that** the cover (32) is displaceable translationally relative to the at least one injection opening (36).

5. Injection valve (30) according to one of Claims 1 to 4, **characterized in that** the cover (32) is axially displaceable.

6. Injection valve (30) according to one of Claims 1 to 5, **characterized in that** the closing element (33) opens inwardly.

7. Injection valve (30) according to one of Claims 1 to 6, in particular Claim 3, **characterized in that** the at least one injection opening (36) is formed obliquely, in particular at an angle of 30 - 60°, with respect to the central axis (38) of the injection valve (30).

8. Injection valve (30) according to one of Claims 1 to 7, **characterized in that** the valve body (31) comprises a spray hole disc (43), wherein the at least one injection opening (36) is formed in the spray hole disc (43).

9. Injection valve (30) according to one of Claims 1 to 8, **characterized in that** the cover (32) is of stellate form.

## Revendications

1. Soupape d'injection (30) pour un dispositif de post-traitement de gaz d'échappement, comprenant un corps de soupape (31), au moins une ouverture d'injection (36) étant réalisée dans le corps de soupape (31), et comprenant un organe de fermeture (33) avec lequel une alimentation en fluide à l'au moins une ouverture d'injection (36), peut être fermée, un couvercle (32) étant fixé à la soupape d'injection (30), par le biais duquel l'au moins une ouverture d'injection (36) peut être fermée sur son côté de sortie (39), **caractérisée en ce que** le couvercle (32) peut être déplacé par rotation par rapport à l'au moins une ouverture d'injection (36).

2. Soupape d'injection (30) selon la revendication 1, **caractérisée en ce que** le couvercle (32) est en liaison fonctionnelle avec l'organe de fermeture (33), en particulier par un accouplement mécanique.

3. Soupape d'injection (30) selon la revendication 2, **caractérisée en ce que** le couvercle (32) et l'organe de fermeture (33) peuvent être actionnés par le biais d'un actionneur commun (53), en particulier un circuit magnétique.

4. Soupape d'injection (30) selon l'une quelconque des revendications 1 à 3, **caractérisée en ce que** le couvercle (32) peut être déplacé en translation par rapport à l'au moins une ouverture d'injection (36).

5. Soupape d'injection (30) selon l'une quelconque des revendications 1 à 4, **caractérisée en ce que** le couvercle (32) peut être déplacé axialement.

6. Soupape d'injection (30) selon l'une quelconque des revendications 1 à 5, **caractérisée en ce que** l'organe de fermeture (33) s'ouvre vers l'intérieur.

7. Soupape d'injection (30) selon l'une quelconque des revendications 1 à 6, en particulier selon la revendication 3, **caractérisée en ce que** l'au moins une ouverture d'injection (36) est réalisée de manière oblique, en particulier suivant un angle de 30 à 60° par rapport à l'axe médian (38) de la soupape d'injection (30).

8. Soupape d'injection (30) selon l'une quelconque des revendications 1 à 7, **caractérisée en ce que** le corps de soupape (31) comprend un disque perforé d'injection (43), l'au moins une ouverture d'injection (36) étant réalisée dans le disque perforé d'injection (43).

9. Soupape d'injection (30) selon l'une quelconque des revendications 1 à 8, **caractérisée en ce que** le couvercle (32) est réalisé en forme d'étoile.
